# EUROPÄISCHE PATENTSCHRIFT

(11) **EP 2 114 755 B1**
(45) Veröffentlichungstag und Bekanntmachung des Hinweises auf die Patenterteilung: **26.01.2011**
(21) Anmeldenummer: 08715500.8
(22) Anmeldetag: 14.02.2008
(51) Int. Cl.: B62D 29/00

(54) **LEICHTBAUKONSTRUKTION MIT EINER FRAKTAL GEGLIEDERTEN STÜTZSTRUKTUR**
LIGHTWEIGHT CONSTRUCTION HAVING A FRACTALLY STRUCTURED SUPPORTING STRUCTURE
CONSTRUCTION LÉGÈRE DOTÉE D'UNE STRUCTURE DE SOUTIEN À DIVISION FRACTALE

(30) Priorität: 05.03.2007 DE 102007011107
(43) Veröffentlichungstag der Anmeldung: 11.11.2009
(73) Patentinhaber: Stiftung Alfred-Wegener-Institut für Polar- und Meeresforschung, 27570 Bremerhaven (DE)
(72) Erfinder: HAMM-DUBISCHAR, Christian, 27580 Bremerhaven (DE)
(86) Internationale Anmeldenummer: PCT/DE2008/000287
(87) Internationale Veröffentlichungsnummer: WO 2008/106925

(56) Entgegenhaltungen:
- WO-A-98/55712
- WO-A-2005/052818
- DE-A1- 19 650 647
- US-A1- 2002 104 288
- US-B1- 6 341 460
- US-B1- 6 627 271

## Beschreibung

Die Erfindung bezieht sich auf Leichtbaukonstruktionen nach dem Oberbegriff des Anspruchs 1

Leichtbaukonstruktionen folgen einer Konstruktionsphilosophie, die maximale Gewichtseinsparung bei optimaler Stabilität zum Ziel hat. Die Gründe für Leichtbau können verschiedener Natur sein. Ein Hauptargument für Leichtbau ist die Einsparung von Rohstoffen sowohl bei der Herstellung des Produkts als auch bei dessen Nutzung. Bei Fahr- und Flugzeugen ist bei konsequentem Leichtbau eine geringere Antriebsleistung für die gleichen Fahr- bzw. Flugeigenschaften notwendig. Des Weiteren sinkt der Kraftstoffverbrauch und das Gewichtsverhältnis von Transportmittel und Fracht verbessert sich. So können das Gesamtgerät, die Antriebsquelle und der Kraftstoffvorrat kleiner dimensioniert werden. Leichtbau ist sehr bedeutend im Fahrzeugbau, Flugzeugbau und in der Raumfahrt. Besonders in der Raumfahrt kostet jedes beförderte Kilogramm mehrere tausend Euro, bei denen durch Leichtbauweise große Einsparungen erzielt werden können. Auch im Gebäudebau, vor allem in der Industrie beim Bau von Produktions-, Montage- und Lagerhallen, stellt die Leichtbauweise eine kostengünstige und sehr flexible Alternative dar. Metallische Leichtbauwerkstoffe sind z.B. Aluminium, Magnesium, hochfeste Stähle und Titan. Daneben gelten Kunststoffe, Holz- und Papierwerkstoffe und Faserverbundwerkstoffe als klassische Leichtbaumaterialien. In den letzten Jahren gewinnen Kunststoffe und speziell Faser-Kunststoff-Verbunde an Bedeutung. Durch ihre hohen spezifischen Steifigkeiten und Festigkeiten sind sie attraktive Leichtbauwerkstoffe. Sie bieten eine Fülle neuer Verarbeitungs- und Gestaltungsmöglichkeiten.

Der konstruktive Leichtbau versucht das Leichtbauziel durch konstruktive Maßnahmen zu erreichen. In erster Linie wird eine möglichst gleichmäßige Ausnutzung des Materialvolumens angestrebt. So werden z.B. biegebeanspruchte Bauteile durch Sandwichlösungen oder Fachwerke ersetzt. Prinzipiell wird versucht, möglichst dünnwandig zu konstruieren. Dies erhöht jedoch die Gefahr des Stabilitätsversagens (Beulen, Knicken), was eine genaue mechanische Analyse notwendig macht. Kräfte in Leichtbaukonstruktionen sollten direkt geleitet werden. Bei komplexen Konstruktionen müssen insbesondere Kerbspannungen minimiert werden. Fachwerkträger mit reinen Zug- und Druckstäben stellen dahingehend optimale Strukturen dar.

### STAND DER TECHNIK

Eine plattenförmige Leichtbaukonstruktion mit zwei Oberflächenhäuten, zwischen denen gewellt- bzw. halbwabenförmig verlaufende Metallbänder als Stützrippen einer Stützstruktur verlaufen, ist aus der US 2002/0108349 A1 bekannt. Die DE 10 2004 025 667 A1 offenbart eine Stützstruktur für Leichtbaukonstruktionen in Mehrschichtbauweise, bei der Stützrippen als geschlossene Rechtecke mauerartig versetzt angeordnet und mit einem Füllmaterial ausgefüllt sind. Aus der DE 10 2004 031 823 A1 ist eine Leichtbauplatte bekannt, bei der mehrere Bereiche unterschiedlich gewellter Stützrippen definiert sind. Gekrümmte Wabenfachwerke mit Stützstrukturen unterschiedlicher Ausprägung sind aus der DE 101 19 020 A1 bekannt. Stützstrukturen mit einem pyramidenstumpfförmigen Verlauf in einer oder mehreren Ebenen werden in DE 100 22 742 A1**.** DE 100 37 589 A1 und DE 203 19 426 U1 offenbart. Die DE 100 37 589 A1 zeigt die pyramidenstumpfförmige Stützstruktur für eine Ausgestaltung einer Leichtbaukonstruktion in Form einer Lichtkuppel.

Aus der EP 0 618 842 B1 ist ein Wabenkörper mit einer Innenstruktur bekannt, die durch eine Stützstruktur gehalten wird. Der Wabenkörper kann in einem Rohr angeordnet sein. Die Stützstruktur kann aus mit unterschiedlichen Radien gewellten Blechen bestehen, die übereinander angeordnet sind. Ein Hohlkörper-Leichtbauteil wird in der DE 198 48 516 A1 offenbart. Die wannenförmige Leichtbaukonstruktion weist einen Innenraum auf. Die aus gitterförmig verlaufenden Stützrippen aufgebaute Stützstruktur befindet sind in der Wandung zwischen den beiden Oberflächen.

Eine Leichtbaukonstruktion mit einer seine Oberflächenhaut mechanisch vertärkenden, regelmäßig periodisch aufgebarten Stützstruktur wird in der DE 100 47 753 A1 beschrieben, wobei die Stützstruktur bei dieser bekannten Leichtbaukonstruktion aus sternförmig angeordneten Stützrippen besteht. Die Leichtbaukonstruktion ist rohrförmig ausgebildet und verfügt über einen nutzbaren Innenraum. Die Stützstruktur ist auf der Außenseite des Rohres zwischen einer inneren Oberflächenhaut und einer äußeren Oberflächen haut, die als Außenhaut dient, angeordnet. Es können für die Außenhaut, für die Innenhaut und die Stützrippen relativ geringe Wandstärken verwendet werden, sodass eine sehr leichte Leichtbaukonstruktion vorliegt, die aber trotzdem aufgrund der komplexen Stützstruktur eine hohe Festigkeit aufweist. An den spitzwinkligen Kreuzungspunkten der Stützrippen ergeben sich bei der bekannten Stützstruktur jedoch starke mechanische Belastungen durch Kerbwirkung und damit durch Spannungsspitzen. Außerdem liegen zwischen den einzelnen Stützrippen dreieckige Bereiche ohne weitere Unterstützung, sodass auf diese Stellen keine größeren Druckkräfte einwirken dürfen. Abhilfe hierbei würde nur eine Vergrößerung der Wand- und Stützrippenstärken bringen, was aber nicht im Sinne der Materialeinsparung bei Leichtbaukonstruktionen ist.

Die U5 2002/104288 A1 offenbart eine Leichtbaukonstruktion mit den Merkmalen des Oberbegriffs des Anspruchs 1.

### AUFGABENSTELLUNG

Die **Aufgabe** für die vorliegende Erfindung ist daher darin zu sehen, ausgehend von der gattungsbildenden Leichtbaukonstruktion mit einer seine Oberflächenhaut mechanisch verstärkenden, regelmäßig periodisch aufgebauten Stützstruktur die Leichtbaukonstruktion so weiterzubilden, dass sowohl eine Materialeinsparung als auch eine erhöhte Systemzuverlässigkeit im Zusammenhang mit dem Parameter Druckfestigkeit von Hohlkörpern und Dichtungs- und Kuppelelementen" erreicht wird. Die Kombination der Parameter Systemzuverlässigkeit, Materialeinsparung und Druckfestigkeit ist beispielsweise bei Leichtbaukonstruktionen in Form von Flugzeugen, Schiffsrümpfen und Tauchbooten sowie beispielsweise bei Luftschotts von Flugzeugen und Lichtkuppeln von besonderer Bedeutung. Die erfindungsgemäße Lösung für diese Aufgabe ist dem Hauptanspruch zu entnehmen. Vorteilhafte Weiterbildungen der Erfindung werden in den Unteransprüchen aufgezeigt und im Folgenden im Zusammenhang mit der Erfindung näher erläutert.

Die erfindungsgemäße Leichtbaukonstruktion ist grundsätzlich durch eine fraktale Gliederung der Stützstruktur in mehreren, zumindest zwei fraktalen Ebenen, bei der sich der Verlauf der Stützkontur in sich selbst zumindest noch ein weiteres Mal wiederholt, gekennzeichnet. Die Anzahl der jeweils in der Regel um eine Dimension kleiner werdenden, selbstähnlichen Wiederholungen gibt die Anzahl der fraktalen Ebenen an. Zwischen den Ebenen sind die Übergänge fließend und integriert. Als wesentliche Vorteile der Verwendung einer fraktalen Stützstruktur sind anzusehen, dass Kerbspannungsspitzen durch die direkten, fließenden Übergänge (in z-Richtung) zwischen den integrierten Strukturen in den verschiedenen fraktalen Ebenen der Stützstruktur ohne Kerb- oder Bruchkanten sicher verhindert werden und dass bei gleicher Festigkeit leichtere, effizienter stützende Strukturen eingesetzt werden können. Die Festigkeit ergibt sich durch entsprechende Ausprägung der fraktalen Stützstruktur sowohl in kleinen Stützbereichen als auch in größeren Stützbereichen und in ganz großen Stützbereichen. Die Gliederung der Stützstruktur wächst also mit der Größe des Stützbereichs und lässt sich einfach daran anpassen. Außerdem kann die Struktur aus einem Guss gefertigt werden, spezielle Verbindungen oder Klebungen und die sich daraus ergebende Probleme entfallen. Mit der Erfindung wird ein in der Technik bislang noch nicht angewandtes Prinzip eines fraktal gegliederten Randbereiches mit integrierten fließenden Übergängen senkrecht zur Oberflächenhaut (z-Richtung) zur Unterstützung von Oberflächenhäuten angewendet.

Der Begriff "Fraktal" (Adjektiv oder Substantiv) wurde von Benoît Mandelbrot (1975) geprägt und leitet sich aus dem Lateinischen von fractus - gebrochen ab. Mit Fraktalen werden natürliche oder künstliche Gebilde oder geometrische Muster bezeichnet, die einen hohen Grad von Skaleninvarianz bzw. Selbstähnlichkeit aufweisen. Das ist beispielsweise der Fall, wenn ein Objekt aus mehreren verkleinerten Kopien seiner selbst besteht. Jede Verkleinerung definiert dann eine fraktale Ebene. Anzutreffen ist immer der fließende Übergang zwischen den Strukturelementen in den verschiedenen fraktalen Ebenen. Geometrische Objekte dieser Art unterscheiden sich in wesentlichen Aspekten von gewöhnlichen glatten Figuren. Dabei muss die Selbstähnlichkeit jedoch nicht perfekt sein, wie die erfolgreiche Anwendung der Methoden der fraktalen Geometrie auf natürliche Gebilde wie Bäume, Wolken, Küstenlinien, etc. zeigen. Die genannten Objekte sind in mehr oder weniger starkem Maß selbstähnlich strukturiert (ein Baumzweig sieht ungefähr so aus wie ein verkleinerter Baum), die Ähnlichkeit ist jedoch nicht streng, sondern stochastisch. Im Gegensatz zu Formen der euklidischen Geometrie, die bei einer Vergrößerung oft flacher und flacher und damit einfacher werden (z.B. Kreis), können bei Fraktalen immer komplexere und neue Details auftauchen. Fraktale Muster werden oft durch rekursive Operationen erzeugt. Auch einfache Erzeugungsregeln ergeben nach wenigen Rekursionsschritten schon komplexe Muster. Dies ist zum Beispiel am Pythagoras-Baum zu sehen. Ein solcher Baum ist ein Fraktal, welches aus Quadraten aufgebaut ist, die so angeordnet sind wie im Satz des Pythagoras definiert. Ein weiteres Fraktal ist das Newton-Fraktal, es wird berechnet über das Newton-Veifahren, das zur Nullstellenberechnung verwendet wird. Ein Fraktal im dreidimensionalen Raum ist der Menger-Schwamm. Fraktale Konzepte finden sich auch in der Natur. Dabei ist jedoch die Anzahl der Ebenen von selbstähnlichen Strukturen begrenzt und beträgt oft nur 3-5. Typische Beispiele aus der Biologie sind die streng fraktalen Strukturen bei der grünen Blumenkohlzüchtung Romanesco, bei den Farnen und bei den Ammoniten. Eine gute Übersicht über die fraktalen Strukturen bei Ammoniten wird in dem Buch "Ammonoideen: Leben zwischen Skylla und Charybdis" von Ulrich Lehmann (Enke Verlag, Stuttgart 1990), pp 63-105 gegeben. Aber auch Mikroalgen zeigen oft fraktal aufgebaute Stützstrukturen in mehreren Ebenen. Weit verbreitet sind auch fraktale Strukturen mit statistischer Selbstähnlichkeit. Dazu zählen beispielsweise Bäume, der Blutkreislauf, Flusssysteme und Küstenlinien.

Schutzrechte zum Thema "fraktale Ausgestaltung" sind bislang nur beim Antennenbau (DE 10 2004 013 642 B4**,** DE 696 33 975 T2), bei der Erzeugung einer Dämpfungsstruktur im Randbereich einer Schaltungsplatine (DE 103 36 290 A1), von Interfluid-Turbulenz ( DE 697 31 841 T2) oder Polymeren (DE 696 35 552 T2) und bei einer Teilabdeckung einer Straße zum Lärmschutz (DE 102 20 989 A1) bekannt. Fraktale Stützstrukturen mit einem Verlauf nach dem Vorbild von Ammoniten oder Mikroalgen, hier insbesondere Kieselalgenschalen, in technischen Anwendungen werden nicht beschrieben.

Die hoch spezialisierten, sehr formenreichen Ammoniten (lat. *Ammonoidea*) sind im Zusammenhang mit einer globalen Naturkatastrophe (Meteoriteneinschlag) vor ca. 65 Millionen Jahren ausgestorben. Ihre Strukturmerkmale waren dennoch wesentlich höher entwickelt als die ihrer heute lebenden Verwandten wie z.B. Nautilus. Daher sind einige der für den Leichtbau interessantesten Strukturen nicht in der Gegenwart, sondern, wie im hier gezeigten Fall, in der Kreidezeit zu suchen. Im Laufe der Evolution tendieren insbesondere die Trennwände (Septen) des gasgefüllten Gehäuseteils (Phragmokon) zu immer filigraneren und komplexeren Auffaltungen, so dass z.B. bei zahlreichen Ammoniten der Kreidezeit jeder Quadratzentimeter der Außenhaut von den inneren Strukturen unterstützt wird. Zur Mitte der Trennwand hin verbinden sich ihre stark gefalteten Außenbereiche zu einer einfachen, glatten Fläche und zeigen die integrierten, fließenden Übergänge zwischen den Strukturelementen in den einzelnen fraktalen Ebenen, die zu einer nahezu perfekten Kerbspannungsfreiheit führen. Eine Anwendung der fraktal gegliederten Stützstruktur nach der Erfindung ist immer dann sinnvoll, wenn der Innenraum der Leichtbaukonstruktion nicht bzw. nicht vollständig für eine Nutzung vorgesehen ist (beispielsweise Stoßfänger, Schiffsdecks, Schiffsrümpfe und Flugzeugteile für die Speicherung von Flüssigkeiten (Treibstoffe, somit Tanker und Tragflächen)). Dabei können die Stützstrukturen je nach Anforderung und Platzverhältnisse sowohl auf der Außenseite als auch auf der Innenseite der Oberflächenhaut vorgesehen sein. Besonders stabil zu bauende Konstruktionen können Stützstrukturen auch auf beiden Seiten der Außenhaut aufweisen. Im Aufbau kann eine Stützstruktur äußerst variabel und wiederum an Last- und Platzverhältnisse angepasst sein.

Ein häufig auftretendes Element in einer Stützstruktur ist die Stützrippe. Weitere Elemente sind beispielsweise Stützbögen, Stützbrücken, Stützstreben, Stützpfeiler, Stützwände und Stützplatten. Dabei soll im Zusammenhang mit der Erfindung verallgemeinert auch dann von Stützrippen gesprochen werden können, wenn diese sich beispielsweise im Innenraum eines Rohrs über dessen gesamten Querschnitt erstrecken. Aus der Konstruktionstechnik sind Stützrippen in der Regel als nicht durchgängig ausgeführt bekannt. Die eine Art Trennwand bildenden Stützrippen (analog zu den Septen der Ammoniten) müssen dabei keinesfalls undurchlässig ausgeprägt sein, sondern können bei Bedarf durchaus ein- oder mehrfache Durchbrechung zum Durchlass von Fluiden aufweisen. Je nach Art der Leichtbaukonstruktion kann die Stützstruktur aus den unterschiedlichsten Materialien, beispielsweise Holz, Pappe, Kunststoffe, Faser- und andere Verbundwerkstoffe und Metallwerkstoffe, hergestellt werden. Die Einsatzgebiete der Erfindung für die Industrie sind derzeitig noch nicht vollständig zu überblicken. Angefangen bei Gewichtsersparnissen von Supertankem, die dann in der Lage wären, mehr Fracht mitzuführen, über tiefer tauchende U-Boote, leichtere Tragflächen und Rümpfe von Flugzeugen, Stoßfänger und Seitenaufprallschutz von Fahrzeugen bis hin zu neuen Designs für Sitzmöbel sind unzählige Einsatzgebiete denkbar. Ein konkretes Beispiel für eine Anwendung ist auch das Luftschott von Flugzeugen, das entsprechend der äußersten Trennwand der Ammoniten einer deutlichen Druckdifferenz ausgesetzt ist.

Nach dem Vorbild der Natur kann dem fraktalen Verlauf der Stützrippen noch ein mäanderförmiger Verlauf der Stützrippen überlagert werden, wodurch sich eine besonders gleichmäßige Unterstützung der Oberflächenhaut ergibt. Bei der vorliegenden Erfindung werden unter Mäandern nicht orthogonale, sondern gerundete Formen mit Richtungsänderungen in der Formverlaufslinie, also im Sinne von Wellenlinien, verstanden. Dabei kann der mäanderförmige Verlauf auch asymmetrisch sein. Es ist nämlich auffällig, dass die äußeren, mäandrierenden Bereiche der Stützstrukturen (die Lobenlinien) bei den Ammoniten in der Regel asymmetrisch aufgebaut sind, d.h. in eine Richtung spitz, in die andere Richtung bogenförmig ausgeprägt sind. Bei einer Druckdifferenz zwischen zwei durch diese Strukturen getrennten Kammern ist dies technisch sinnvoll, wenn die maximale Zugfestigkeit des Materials sich von der Druckfestigkeit signifikant unterscheidet.

Des Weiteren können die Stützrippen auch geschlossen verlaufen, beispielsweise in Form eines Rechtecks oder bevorzugt in Wabenform. Der fraktale Verlauf ergibt sich dann durch die integrierte Anordnung immer kleiner und niedriger werdender Wabenstützrippen. Dabei kommt zum Tragen, dass Flächendruck und Materialquerschnitt beide mit dem Quadrat des Längenmaßstabes skalieren. Daher sind auch Breite und Höhe der Wabenstrukturen im selben Maße wie ihr Durchmesser verkleinert. Durch diesen Ansatz können die Außenhäute von Druckgehäusen, abhängig von der Anzahl der fraktalen Ebenen, beliebig dünn gestaltet werden. Die integrierten Waben können dabei sowohl innen als auch außen angebracht werden. Jede fraktale Ebene wird durch eine Verkleinerungsform der Stützstruktur definiert (siehe hierzu auch den speziellen Beschreibungsteil). Eine Kombination der fraktalen Stützstruktur mit einer nicht fraktalen, herkömmlichen Stützstruktur, beispielsweise einer einfachen Rippenstruktur, ist ebenfalls vorteilhaft möglich.

Weiterhin kann die Oberflächenhaut der Leichtbaukonstruktion als Außenhaut ausgebildet sein. Es kann sich dann beispielsweise um eine Tragfläche oder ein Schott eines Flugzeuges oder um einen Schiffsrumpf handeln. Derartige Leichtbaukonstruktionen, bei denen die Leichtbaukonstruktion dann eher plattenförmig, ggfs. mit einer Wölbung, ausgebildet ist, weisen in der Regel einen nutzbaren Innenraum auf. Dadurch ist bedingt, dass die Stützstruktur nicht den gesamten Innenraum durchziehen kann, sondern nur im Bereich der Außenhaut angeordnet sein kann. Es kann sich bei dem Innenraum aber auch um ein Rohr handeln. Hierbei kann die Stützstruktur bevorzugt im Rohr angeordnet sein. Die Stützrippen können dann das gesamte Rohr durchziehen und Ausnehmungen aufweisen, wenn ein Fluid im Rohr fließen soll. Die Ausbildung der fraktal verlaufenden Stützrippen kann bevorzugt als eine axial gewendelte Radialebene oder als mehrere ebene Radialebenen erfolgen (siehe hierzu auch den speziellen Beschreibungsteil).

### AUSFÜHRUNGSBEISPIELE

Ausbildungsformen der Leichtbaukonstruktion mit einer fraktalen Stützstruktur nach der Erfindung werden nachfolgend anhand der schematischen Figuren zum weiteren Verständnis der Erfindung näher erläutert. Dabei zeigt:
- **Figur 1**: eine Fotografie einer Gehäuseaufsicht eines Ammoniten mit Lobenlinien (Naturvorbild),
- **Figur 2**: eine Fotografie einer Gehäuseeinsicht in den Ammoniten gemäß Figur 1 (Naturvorbild),
- **Figur 3**: ein Diagramm zur Entwicklung zunehmend komplexer Lobenlinien (Naturvorbild),
- **Figur 4**: Simulationen von verschiedenen Lobenlinien (Stand der Technik),
- **Figur 5**: eine Fotografie einer Gehäuseeinsicht in einen anderen Ammoniten (Naturvorbild),
- **Figur 6**: einen vergrößerten Ausschnitt aus einer ersten fraktalen Stützstruktur,
- **Figur 7**: die Anordnung der Stützstruktur gemäß Figur 6 in einem Rohr (halbierter Längsschnitt),
- **Figur 8**: einen vergrößerten Ausschnitt aus einer zweiten fraktalen Stützstruktur,
- **Figur 9**: eine Gehäuse mit einer dritten fraktalen Stützstruktur in Wabenform,
- **Fig. 10,11,12**: mikroskopische Aufnahmen von Mikroalgen (Kieselalgen schalen) (Naturvorbild) und
- **Figur 13**: die evolutionäre entwicklung der Ammoniten mit simulierten Spannungsdiagrammen.

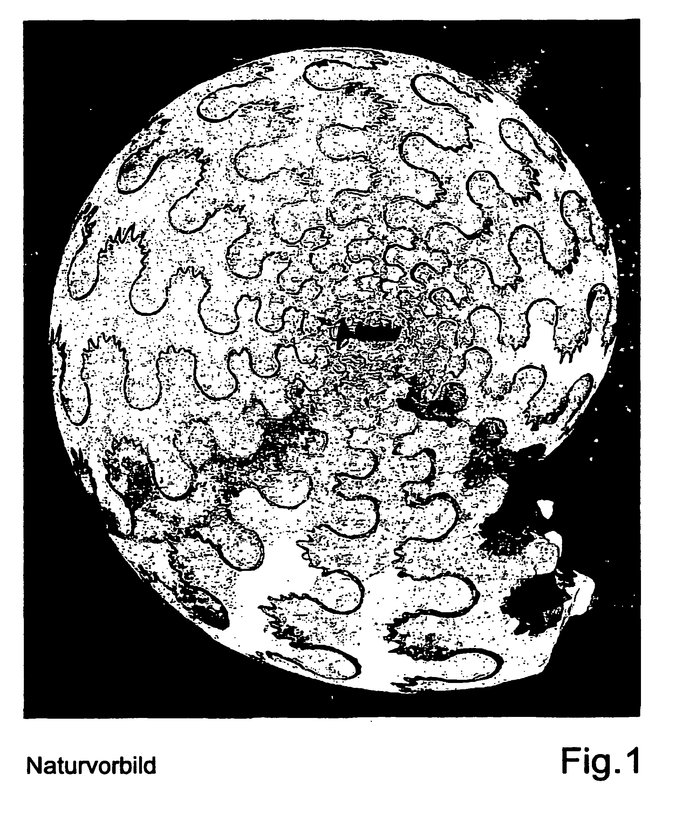

Aus dem oben zitierten Buch von Ulrich Lehmann entstammen die folgenden Figuren 1 bis 5:

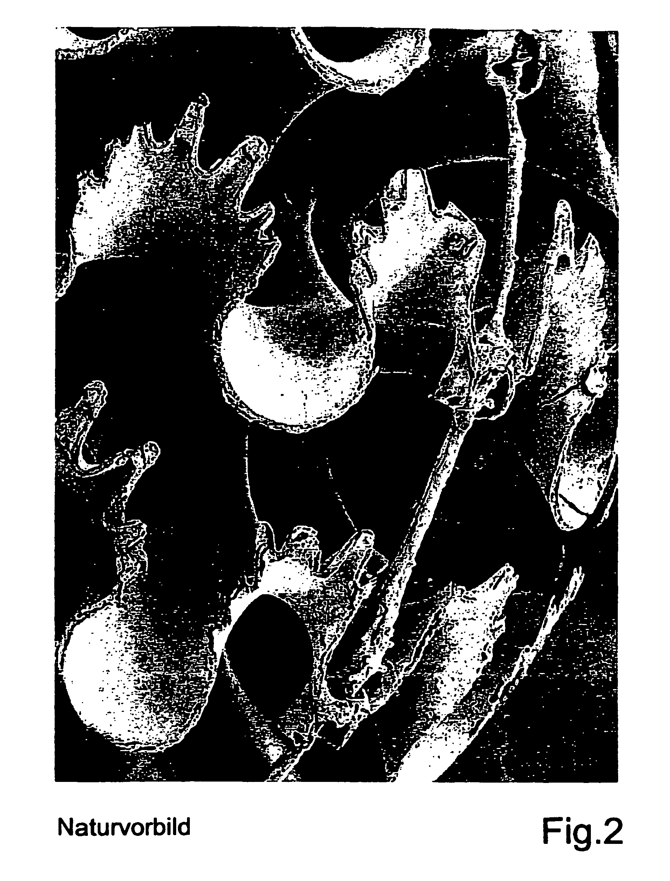

Die **Figur 1** zeigt die Lobenlinien eines Ammoniten (*Amphipopanoceras medium*) an einem auf Spitzbergen gefundenen Steinkern eines phosphatisierten Exemplars mit Kalkspat-Ausfüllung. Die Lobenlinie stellt die Kontaktlinie die inneren Stützstruktur bzw. der Stützrippen (Septen) mit der äußeren Gehäusewand dar. Deutlich ist der fraktal gegliederte Verlauf der Lobenlinien zu erkennen. Diese Verfaltung ist aber nur auf den Randbereich beschränkt, zum Inneren hin glättet sich der Verlauf (vergleiche **Figur 2**) und zeigt die integrierten, fließenden Übergänge zwischen den fraktalen Ebenen. Die fraktale Strukturierung dient also der optimalen Unterstützung der dünnen Außenhaut.

Die Außenwände der gasgefüllten Kammern konnten vom Tier nicht repariert werden, da sie nicht an lebendes Gewebe reichten. Die Beschädigung der Kammerwände und die damit verbundene Flutung der Kammern führte so zum unkontrollierten Absinken des Tieres und damit zu seinem Tod. Entwicklunggeschichtlich ist es daher sinnvoll, dass Ammoniten zunehmend stabilere Gehäuse entwickelten, indem Tiere mit diesen stabileren Gehäusen Attacken von Fressfeinden überlebten oder diese Tiere in der Lage waren, tiefer liegende, von anderen nicht erreichbare Nahrungsressourcen zu nutzen. Der Entwicklung von massiveren Gehäusen standen dabei zwei Umstände entgegen. Zum einen erfordert ein massiveres Gehäuse mit dickeren Wänden einen erhöhten Bauaufwand. Es müsste zusätzliche Energie in den Gehäusebau investiert werden, die dann für andere lebenswichtige Bereiche fehlt. Zum anderen bedeuten dickere Gehäusewände auch zusätzliches Gewicht, was bei einem Tier, das sich schwebend im Wasser bewegt, nur in engen Grenzen kompensiert werden kann.

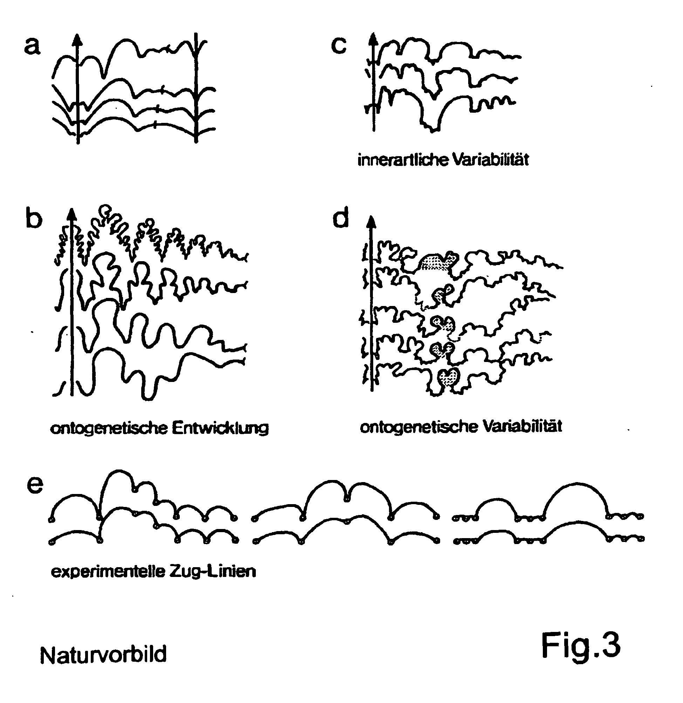

Die besten Überlebens- und Fortpflanzungschancen hatten also Tiere, die es schafften, ein stabileres Gehäuse zu entwickeln, ohne dafür mehr Material zu brauchen. Ein Trend, der sich gleich mehrfach in der Entwicklungsgeschichte der Ammoniten nachweisen lässt, ist dabei die Bildung von fraktal gefalteten Septenstrukturen. Die Trennwände zwischen den Kammern wurden dabei mit der Zeit immer filigraner und komplexer (siehe **Figur 3**). Das wiederholte Ausbilden dieser sehr speziellen Septenform zeigt, dass es sich dabei nicht um eine zufällige Entwicklung handelte, sondern gefaltete Kammerwände einen erheblichen Wettbewerbsvorteil mit sich bringen mussten. Das Ammonitenseptum muss im Prinzip zwei Funktionen erfüllen. Es verstärkt das Gehäuse gegen den Angriff von Fressfeinden, die mit ihren Zähnen versuchen, das Gehäuse aufzubrechen. Dabei handelt es sich um eine starke, punktuelle Belastung. Die zweite Funktion des Septums ist die Stabilisierung des Gehäuses gegen einen erhöhten Außendruck, wie er in großen Tiefen auftritt. Dabei tritt eine gleichmäßige Druckbelastung am Umfang des Gehäuses und am Septum am Ende der Wohnkammer auf.

Im Laufe der Entwicklungsgeschichte der Ammoniten kam es mehrere Male fast zum vollständigen Aussterben dieser Tiergruppe. Diese Zeitpunkte des drastischen Rückganges der Artenvielfalt bei den Ammoniten fallen meist mit dem Übergang von einem Zeitalter zum nächsten zusammen. Dabei überlebten häufig nur ein oder zwei wenig spezialisierte Gattungen mit einfachem Gehäuseaufbau. Im Verlauf der darauf folgenden Vervielfältigung der Arten kam es auch wieder zu einer stärkeren Faltung der Septen.

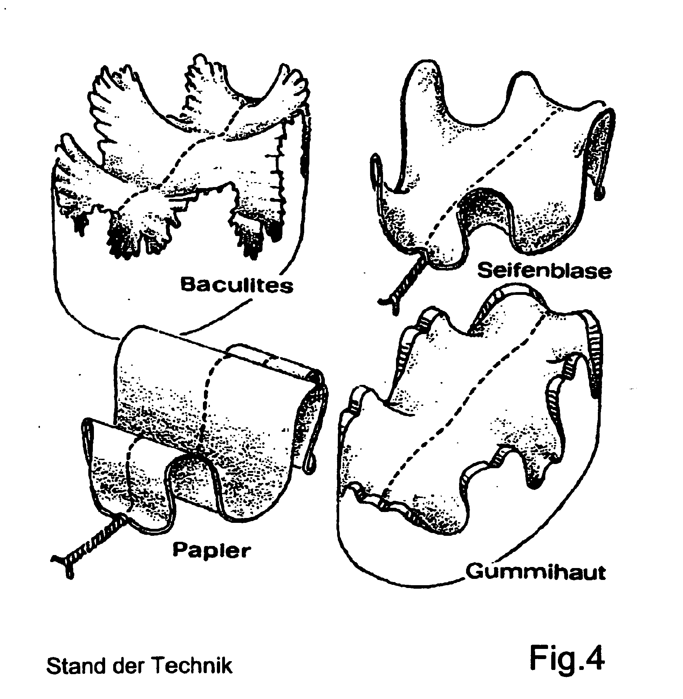

Die **Figur 4** zeigt verschiedene Simulationen von Ammoniten-Septen (oben links: mittels Wellblech, oben rechts: mittels Drahtschlinge und Seifenblase, unten links: mittels Drahtschlinge und Papier, unten rechts: mittels Draht-schlinge und Gummihaut). Deutlich ist die fraktale Stützstruktur in mehreren fraktalen Ebenen zu erkennen. Deutlich ist auch zu erkennen, dass die Ausprägung der Stützstrukturen auf eine seitliche Druckbeanspruchung - über die Gehäuseaußenwand - ausgelegt ist.

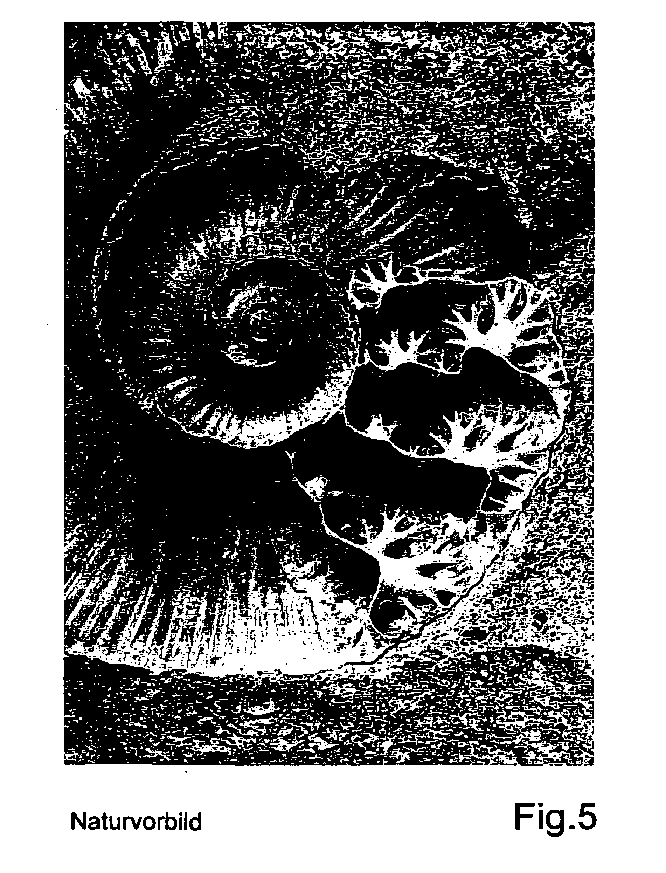

Die **Figur 5** zeigt eine fraktal gegliederte Stützstruktur mit einem baumartigen Muster (gefunden *bei Lytoceras siemensi*)

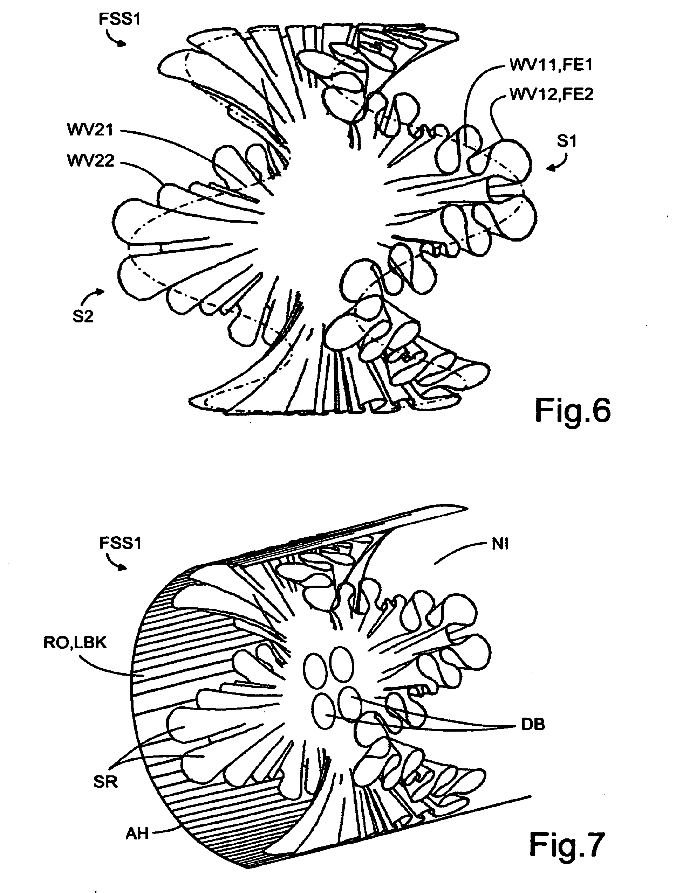

Die **Figur 6** zeigt in 1,5facher Vergrößerung einen Ausschnitt aus einer ersten fraktal gegliederten (oder verkürzt formuliert: fraktalen) Stützstruktur **FSS1** für die Anordnung in einem Rohr. Die Stützrippen **SR** verlaufen auf der einen Seite **S1** in einem übergeordneten Wellenverlauf **WV11** und sind innerhalb dieses übergeordneten Wellenverlaufs **WV11** ein zweites Mal gewellt, sodass sich ein untergeordneter Wellenverlauf **WV12** mit gegenüber dem übergeordneten Wellenverlauf **WV11** ungefähr eine Größenordnung kleineren Abmessungen ergibt. Der übergeordnete Wellenverlauf **WV11** bildet eine erste fraktale Ebene **FE1,** der untergeordnete Wellenverlauf **WV12** bildet eine zweite fraktale Ebene **FE2.** Der Übergang zwischen den beiden fraktalen Ebenen **FE1, FE2** ist fließend integriert, sodass keine spitzen Kerben und damit Kerbspannungsspitzen entstehen. Dies wird noch verdeutlicht in der Glättung der Stützstruktur **FSS1** zur axialen Mitte hin. Wäre der untergeordnete Wellenverlauf **WV12** noch wieder in seinem Verlauf gewellt, wäre noch eine dritte fraktale Ebene vorhanden. Analog verlaufen die Stützrippen **SR auf** der anderen Seite **S2** in einem übergeordneten Wellenverlauf **WV21** und in einem untergeordneten Wellenverlauf **WV22.** Hier jedoch mit dem Unterschied, dass die Periode des übergeordneten Wellenverlaufs **WV21** um eine halbe Periode zum übergeordneten Wellenverlauf **WV11** auf der ersten Seite **S1** versetzt ist, sodass die Wellenmaxima auf der ersten Seite **S1** den Wellenminima auf der zweiten Seite **S2** gegenüber liegen.

Die **Figur 7** zeigt im Originalmaßstab die fraktal gegliederte Stützstruktur **FSS1** in der Anordnung in einem längs aufgeschnittenen Rohr **RO.** Deutlich ist zu erkennen, dass die fraktal gegliederte Stützstruktur **FSS1** wieder fließende integrierte Übergänge in Richtung auf die Rohrachse aufweist und das Rohr **RO** auf seiner Innenseite optimal unterstützt. Das Rohr **RO** weist einen nutzbaren Innenraum **NI** auf, der beispielsweise von einem Fluid durchflossen werden kann. Dazu weisen die Stützrippen **SR** mehrere Durchbrüche **DB** auf. Die Oberflächenhaut des Rohrs **RO** kann als Außenhaut **AH** ausgebildet sein und somit Umwelteinflüssen, insbesondere auch Druckbelastungen unterworfen sein. Das Rohr **RO** stellt eine Leichtbaukonstruktion **LBK** dar, da es anstelle einer dicken, materialintensiven Wandung eine filigrane, fraktal gegliederte Stützstruktur **FSS1** aufweist.

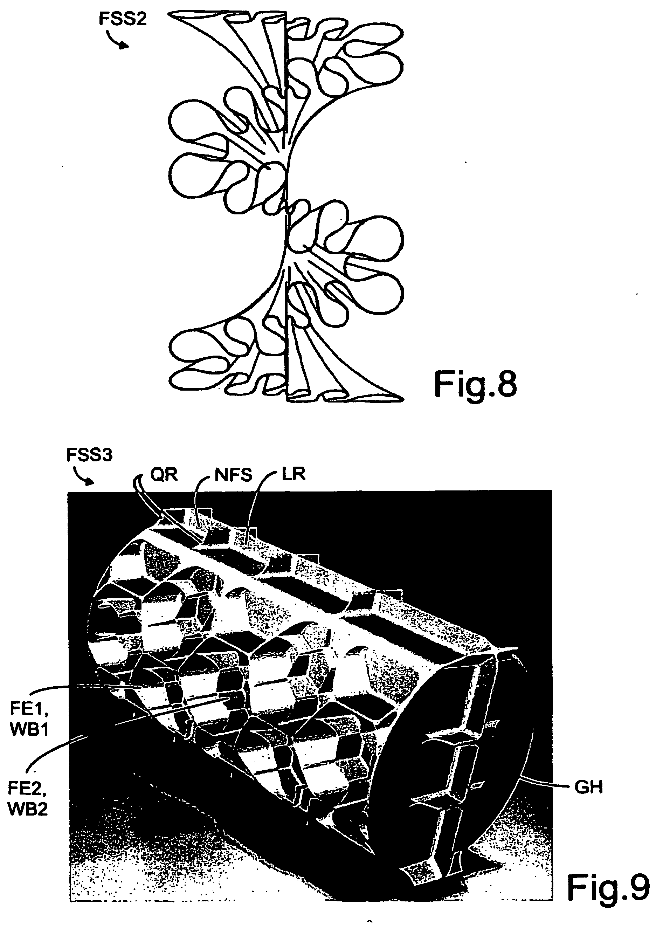

Die **Figur 8** zeigt in zweifacher Vergrößerung eine zweite fraktale Stützstruktur **FSS2** im halbierten Längsschnitt, die der ersten fraktal gegliederten Stützstruktur **FSS1** entspricht, jedoch eine andere Periode aufweist.

Die **Figur 9** zeigt ein Gehäuse **GH** mit einer fraktal gegliederten Stützstruktur **FFS3** in Wabenform. Die fraktal gegliederte Stützstruktur **FFS3** weist zwei fraktale Ebenen auf: einer ersten fraktalen Ebene **FE1** mit einzelnen Waben **WB1** befindet sich innerhalb jeder Wabe **WB1** fünf, immer kleiner werdende Waben **WB2,** die die zweite fraktale Ebene **FE2** bilden. Weitere Waben innerhalb dieser kleinen Waben würden eine dritte fraktale Ebene bilden.

Weiterhin ist in Figur 9 zu erkennen, dass die fraktal gegliederte Stützstruktur **FSS3** mit einer weiteren nicht fraktalen Stützstruktur **NFS** überlagert wird (hier allerdings außerhalb der Stützstruktur FSS3; eine direkte Überlagerung der Strukturen ist ebenfalls möglich). Hierbei handelt es sich um eine einfache lineare Rippenstruktur mit einer Längsrippe **LR** und mehreren Querrippen **QR.** Durch die Kombination unterschiedlicher Stützstrukturen **FSS, NFS** fraktalen und nicht fraktaler Art kann jede Leichtbaukonstruktion ohne zusätzlichen bedeutenden Materialeinsatz optimal ausgesteift werden.

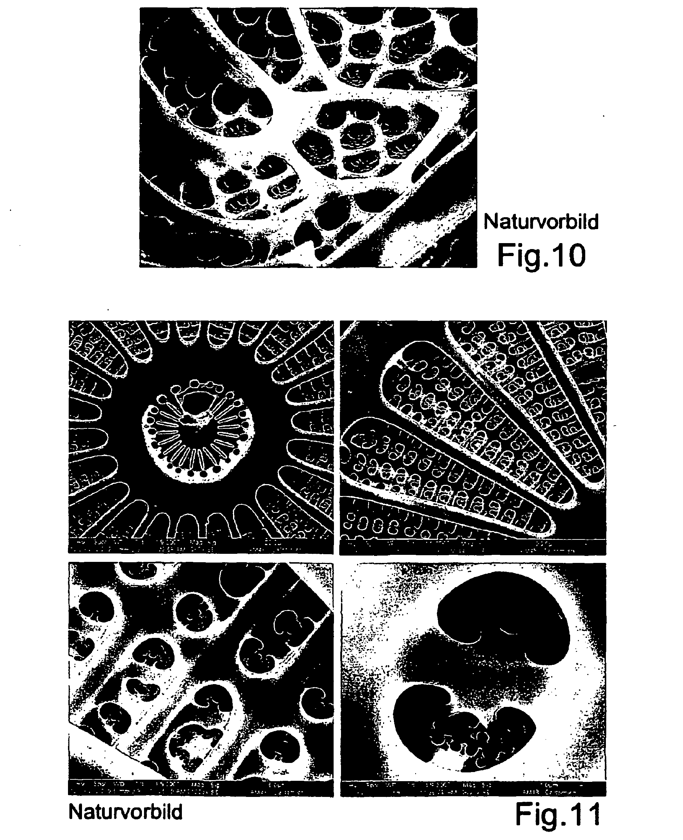

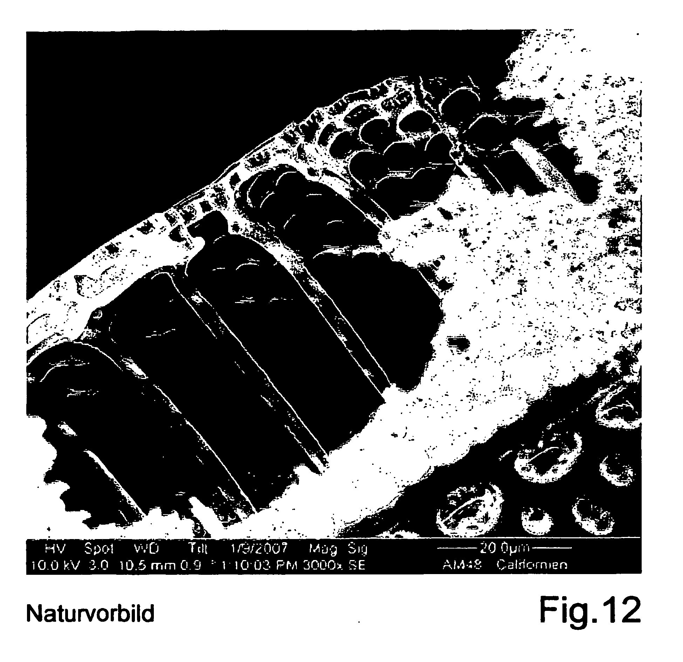

Das Vorbild aus der Natur für die fraktal gegliederte Stützstruktur **FSS3** gemäß Figur 8 ist in **Figur 10** aufgezeigt: Diese Mikroalgen in Form von benthischen Kieselalgen zeigen eine fraktale Gliederung in drei fraktale Ebenen. Eine andere sehr eindrucksvoll fraktal gegliederte Kieselalgenschale zeigt **Figur 11****.** Die **Figur 12** zeigt eine fraktal gegliederte Kieselalge (*Isthmia*) mit einer die fraktale Gliederung direkt überlagerten nicht fraktalen Rippenstruktur.

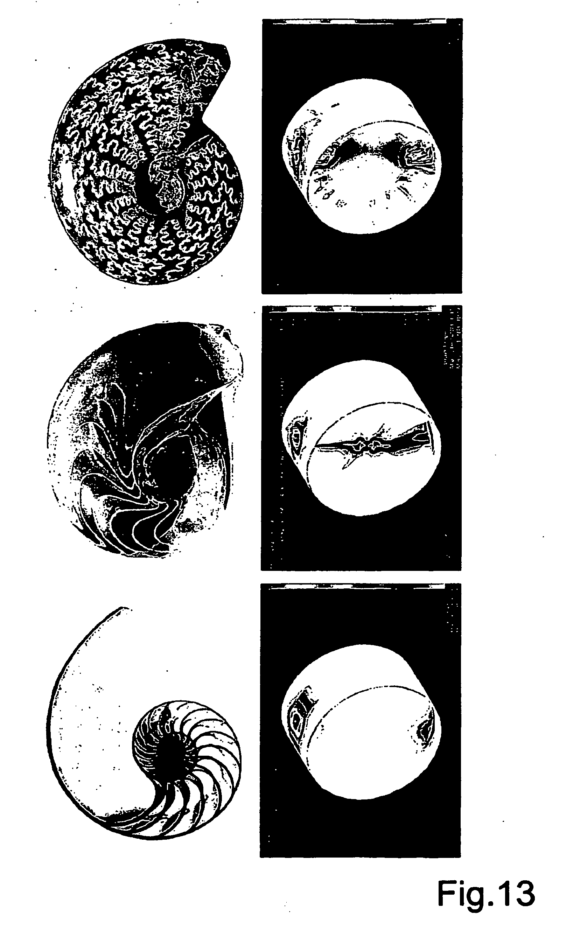

Die **Figur 13** zeigt im oberen Teil die Evolution eines Ammoniten mit zunehmender Komplexität der Stützstruktur. Der rechte Ammonit zeigt eine fraktale Stützstruktur. Die zugehörigen Spannungsdiagramme (erstellt nach der Methode der finiten Elemente FEM) zeigen eine Leistungssteigerung im Bereich der Außenhaut durch die fraktale Gliederung (das Kerngebiet starker Spannungen (dunkle Färbung) ist kleiner geworden, das gesamte Gebiet der Spannungseinleitung (hellgraue Färbung) ist größer und damit gleichmäßiger geworden).

### Bezugszeichenliste

- **AH**: Außenhaut
- **DB**: Durchbruch
- **FE**: fraktale Ebene
- **FSS**: fraktal gegliederte Stützstruktur
- **GH**: Gehäuse
- **LBK**: Leichtbaukonstruktion
- **LR**: Längsrippe
- **NFS**: nicht fraktale Stützstruktur
- **NI**: nutzbarer Innenraum
- **QR**: Querrippe
- **RO**: Rohr
- **S**: Seite
- **SR**: Stützrippe
- **WB**: Wabe
- **WV**: Wellenverlauf

## Patentansprüche

1. Leichtbaukonstruktion (LBK) mit einer seine Oberflächenhaut (AH) mechanisch verstärkenden, regelmäßig periodisch aufgebauten Stützstruktur (FSS1,FSS2,FSS3), mit einer fraktalen Gliederung der Stützstruktur (FSS1, FSS2, FSS3) in zumindest zwei fraktalen Ebenen (FE1, FE2), **gekennzeichnet durch** integrierte, fließende Übergänge zwischen den fraktalen Ebenen (FE1, FE2).

2. Leichtbaukonstruktion nach Anspruch 1,
**gekennzeichnet durch**
eine Anordnung der Stützstruktur (FSS1, FSS2, FSS3) auf der Außenseite und/oder auf der Innenseite der Oberflächenhaut der Leichtbaukonstruktion (LBK).

3. Leichtbaukonstruktion nach Anspruch 1 oder 2,
**gekennzeichnet durch**
einen Aufbau der Stützstruktur aus Stützrippen (SR) mit einem fraktalen Verlauf.

4. Leichtbaukonstruktion nach Anspruch 3,
**gekennzeichnet durch**
einen fraktalen Verlauf der Stützrippen (SR) nach dem Vorbild von Ammoniten oder Mikroalgen.

5. Leichtbaukonstruktion nach Anspruch 3 oder 4,
**gekennzeichnet durch**
eine Überlagerung der fraktal verlaufenden Stützrippen (SR) mit einem mäanderförmigen Verlauf der Stützrippen (SR).

6. Leichtbaukonstruktion nach Anspruch 5,
**gekennzeichnet durch**
einen asymmetrischen mäanderförmigen Verlauf der Stützrippen (SR).

7. Leichtbaukonstruktion nach Anspruch 3,
**gekennzeichnet durch**
einen geschlossenen Verlauf der Stützrippen (SR).

8. Leichtbaukonstruktion nach Anspruch 7,
**gekennzeichnet durch**
einen wabenförmigen Verlauf (WB) der Stützrippen (SR).

9. Leichtbaukonstruktion nach einem der Ansprüche 1 bis 8, **gekennzeichnet durch**
**durch** eine Kombination der fraktal gegliederten Stützstruktur (FSS1, FSS2, FSS3) mit einer nicht fraktal gegliederten Stützstruktur (NFS).

10. Leichtbaukonstruktion nach einem der Ansprüche 1 bis 9, **gekennzeichnet durch**
eine ein- oder mehrfache, dem Durchgang von Fluiden dienende Durchbrechung (DB) der Stützstruktur (FSS1, FSS2, FSS3).

11. Leichtbaukonstruktion nach einem der Ansprüche 1 bis 10, **gekennzeichnet durch**
eine Ausbildung der Oberflächenhaut als Außenhaut (AH).

12. Leichtbaukonstruktion nach einem der Ansprüche 1 bis 11, **gekennzeichnet durch**
einen nutzbaren Innenraum (NI).

13. Leichtbaukonstruktion nach Anspruch 11 oder 12,
**gekennzeichnet durch**
eine Ausbildung als Rohr (RO).

14. Leichtbaukonstruktion nach Anspruch 13,
**gekennzeichnet durch**
eine Anordnung der Stützstruktur (FSS1) im Rohr (RO) und eine Überlagerung der fraktal verlaufenden Stützrippen (SR) mit einer Ausbildung als eine axial gewendelte Radialebene oder als mehrere ebene Radialebenen.

15. Leichtbaukonstruktion nach einem der Ansprüche 1 bis 12, **gekennzeichnet durch**
eine plattenförmige Ausbildung.

16. Leichtbaukonstruktion nach Anspruch 15,
**gekennzeichnet durch**
eine Ausbildung der plattenförmigen Ausbildung als druckfestem Schott.

## Claims

1. Lightweight construction (LBK) with a supporting structure (FSS1,FSS2,FSS3), which is regularly periodically constructed and mechanically reinforces the surface skin (AH) of the lightweight construction, and with a fractal organisation of the supporting structure (FSS1, FSS2, FSS3) in at least two fractal planes (FE1, FE2)
**characterised by**
integrated, fluid transitions between the fractal planes (FE1, FE2).

2. Lightweight construction according to Claim 1,
**characterised by**
an arrangement of the supporting structure (FSS1, FSS2, FSS3) on the outside and/or on the inside of the surface skin of the lightweight construction (LBK).

3. Lightweight construction according to Claim 1 or 2,
**characterised by**
a construction of the supporting structure from supporting ribs (SR) with a fractal course.

4. Lightweight construction according to Claim 3,
**characterised by**
a fractal course of the supporting ribs (SR) in accordance with the example of ammonites or microalgae.

5. Lightweight construction according to Claim 3 or 4,
**characterised by**
an overlaying of the fractally running supporting ribs (SR) with a meandering course of the supporting ribs (SR).

6. Lightweight construction according to Claim 5,
**characterised by**
an asymmetric meandering course of the supporting ribs (SR).

7. Lightweight construction according to Claim 3,
**characterised by**
a closed course of the supporting ribs (SR).

8. Lightweight construction according to Claim 7,
**characterised by**
an alveolate course (WB) of the supporting ribs (SR).

9. Lightweight construction according to any one of Claims 1 to 8, **characterised by**
a combination of the fractally organised supporting structure (FSS1, FSS2, FSS3) with a non-fractally organised supporting structure (NFS).

10. Lightweight construction according to any one of Claims 1 to 9, **characterised by**
a single or multiple perforation (DB) of the supporting structure (FSS1, FSS2, FSS3), used for the passing through of fluids.

11. Lightweight construction according to any one of Claims 1 to 10, **characterised by**
a construction of the surface skin as outer skin (AH).

12. Lightweight construction according to any one of Claims 1 to 11, **characterised by**
a usable interior (NI).

13. Lightweight construction according to Claim 11 or 12,
**characterised by**
a construction as a pipe (RO).

14. Lightweight construction according to Claim 13,
**characterised by**
an arrangement of the supporting structure (FSS1) in the pipe (RO) and an overlaying of the fractally running supporting ribs (SR) with a construction as an axially spiral radial plane or as a plurality of flat radial planes.

15. Lightweight construction according to any one of Claims 1 to 12, **characterised by**
a plate-shaped construction.

16. Lightweight construction according to Claim 15,
**characterised by**
a construction of the plate-shaped construction as a pressure-resistant bulkhead.

## Revendications

1. Construction allégée (LBK) dotée d'une structure de soutien (FSS1, FSS2, FSS3) renforçant mécaniquement sa couche superficielle (AH) et mise en place de façon régulière et périodique, d'une organisation fractale de la structure de soutien (FSS1, FSS2, FSS3) en au moins deux niveaux (FE1, FE2) fractaux,
**caractérisée par**
des transitions intégrées et courantes entre les niveaux (FE1, FE2) fractaux.

2. Construction allégée selon la revendication 1, **caractérisée par**
un agencement de la structure de soutien (FSS1, FSS2, FSS3) sur le côté extérieur et/ou sur le côté intérieur de la couche superficielle de la construction allégée (LBK).

3. Construction allégée selon la revendication 1 ou 2,
**caractérisée par**
une mise en place de la structure de soutien constituée de nervures de soutien (SR) avec un tracé fractal.

4. Construction allégée selon la revendication 3, **caractérisée par**
un tracé fractal des nervures de soutien (SR) sur l'exemple d'ammonites ou de microalgues.

5. Construction allégée selon la revendication 3 ou 4,
**caractérisée par**
une superposition des nervures de soutien (SR) agencées de façon fractale avec un tracé en forme de méandre des nervures de soutien (SR).

6. Construction allégée selon la revendication 5, **caractérisée par**
un tracé en forme de méandre et asymétrique des nervures de soutien (SR).

7. Construction allégée selon la revendication 3, **caractérisée par**
un tracé fermé des nervures de soutien (SR).

8. Construction allégée selon la revendication 7, **caractérisée par**
un tracé en nid d'abeilles (WB) des nervures de soutien (SR).

9. Construction allégée selon l'une quelconque des revendications 1 à 8,
**caractérisée par**
une combinaison de la structure de soutien (FSS1, FSS2, FSS3) organisée de façon fractale avec une structure de soutien (NFS) organisée de façon non fractale.

10. Construction allégée selon l'une quelconque des revendications 1 à 9,
**caractérisée par**
un percement (DB) unique ou multiple, servant au passage de fluides, de la structure de soutien (FSS1, FSS2, FSS3).

11. Construction allégée selon l'une quelconque des revendications 1 à 10,
**caractérisée par**
une conception de la couche superficielle sous forme de couche extérieure (AH).

12. Construction allégée selon l'une quelconque des revendications 1 à 11,
**caractérisée par**
un espace intérieur (NI) utilisable.

13. Construction allégée selon la revendication 11 ou 12,
**caractérisée par**
une conception sous forme de tuyau (RO).

14. Construction allégée selon la revendication 13, **caractérisée par**
une disposition de la structure de soutien (FSS1) dans le tuyau (RO) et une superposition des nervures de soutien (SR) agencées de façon fractale avec une conception sous forme d'un plan radial spiralé de façon axiale ou sous forme de plusieurs plans radiaux.

15. Construction allégée selon l'une quelconque des revendications 1 à 12,
**caractérisée par**
une réalisation en forme de plaque.

16. Construction allégée selon la revendication 15, **caractérisée par**
une conception de la réalisation en forme de plaque sous forme de cloison résistante à la pression.
